# EUROPÄISCHE PATENTSCHRIFT

(11) **EP 4 076 821 B1**
(45) Veröffentlichungstag und Bekanntmachung des Hinweises auf die Patenterteilung: **20.12.2023**
(21) Anmeldenummer: 20771285.2
(22) Anmeldetag: 10.09.2020
(51) Int. Cl.: B23K 20/10, B06B 1/00, B06B 3/00, B29C 65/08

(54) **ULTRASCHALLSCHWEISSVORRICHTUNG SOWIE VERFAHREN ZUM ULTRASCHALLSCHWEISSEN MIT EINEM DÄMPFUNGSELEMENT SEITLICH NEBEN DER KONTAKTFLÄCHE**
METHOD OF ULTRASONIC WELDING HAVING A DAMPING ELEMENT LATERALLY BESIDE THE CONTACT FACE
PROCÉDÉ DE SOUDAGE PAR ULTRASONS DOTÉ D'UN ÉLÉMENT D'AMORTISSEMENT PLACÉ LATÉRALEMENT À CÔTÉ DE LA FACE DE CONTACT

(30) Priorität: 17.12.2019 DE 102019134778
(43) Veröffentlichungstag der Anmeldung: 26.10.2022
(73) Patentinhaber: Auto-Kabel Management GmbH, 79688 Hausen i.W. (DE)
(72) Erfinder: SCHARKOWSKI, Oliver, 03046 Cottbus (DE); SEBETLELA, Kabelo, 79539 Lörrach (DE)
(74) Vertreter: Cohausz & Florack
(86) Internationale Anmeldenummer: PCT/EP2020/075320
(87) Internationale Veröffentlichungsnummer: WO 2021/121691

(56) Entgegenhaltungen:
- DE-A1-102017 104 615
- DE-B3-102011 084 157
- JP-A- 2004 202 828

## Beschreibung

Der Gegenstand betrifft ein Verfahren zum Verschweißen eines Kontaktteils mit einem Anschlussteil durch Ultraschallschweißen entsprechend dem Oberbegriff des Anspruchs 1 (siehe z.B. DE 10 2017 104615 A1).

Insbesondere findet der Gegenstand Anwendung im Verschweißen von Kontaktteilen für den automotiven Einsatz.

Das Verschweißen von metallischen Kontakten miteinander mittels Ultraschall ist hinlänglich bekannt. Beim Ultraschallschweißen wird eine Ultraschallschwingung durch eine Sonotrode in eines der Kontaktteile eingebracht. Diese Ultraschallschwingung führt zu einer Relativbewegung der beiden Kontaktteile an ihrer Berührfläche zueinander. Durch diese Relativbewegung kommt es zu einer Reibung und letztendlich zu einem Verschweißen der Oberflächen der beiden Kontaktteile an einer Schweißfläche miteinander. Diese Art des Verschweißens ist insbesondere beim Verschweißen von Aluminiumkontaktteilen sinnvoll, da beim Verschweißen mittels Ultraschall eine Aluminiumoxidschicht an der Berührfläche zwischen den Kontaktteilen aufgebrochen wird. Durch das Ultraschallverschweißen plastifiziert zumindest eines der beiden Kontaktteile an der Berührfläche und es kommt zu einem Stöffschluss und mithin auch zu einem Formschluss durch das nach dem Verschweißen erstarrte Metall.

Nachteilig beim Ultraschallschweißen ist jedoch, dass die eingebrachte Schwingungsenergie zu ungewollten Beschädigungen der Fügepartner, insbesondere außerhalb der Berührflächen, in geringem Abstand zur Berührfläche auftreten. Es kommt zu feinsten Rissen und Beschädigungen, die zwar die Schweißnaht als solche nicht beeinträchtigen, die Verwendbarkeit des gefügten Bauteils jedoch ausschließen, da dieses nicht dauerhaft stabil bleibt.

Dem Gegenstand lag somit die Aufgabe zugrunde, die Ausschlussrate von mittels Ultraschall gefügten Bauteilen zu verringern.

Diese Aufgabe wird gegenständlich durch ein Verfahren zum Verschweißen eines Kontaktteils mit einem Anschlussteil durch Ultraschallschweißen nach Anspruch 1 gelöst Weitere Ausführungsbeispiele der Erfindung sind in den abhängigen Ansprüche definiert.

Eine Ultraschallschweißvorrichtung ist hinlänglich bekannt. Bei einer Ultraschallschweißvorrichtung wird eine Sonotrode auf einen Amboss bewegt. Die Sonotrode wird über einen Ultraschallkönverter und einen optionalen Booster mit Ultraschallschwingung angeregt. Mit Hilfe der Anpresskraft der Sonotrode auf das Kontaktteil wird die Ultraschallschwingung in das Kontaktteil eingebracht. Im Bereich der Berührfläche des Kontaktteils mit einem Anschlussteil kommt es zu einer Verschweißung.

Zum Aufbringen der Anpresskraft, mit deren Hilfe ein Einbringen der Ultraschallschwingung möglich ist, wird die Sonotrode mittels einer Vorschubeinrichtung in Richtung des Amboss bewegt. Auch ist es möglich, dass die Sonotrode fest ist und der Amboss in Richtung der Sonotrode bewegt ist. Insofern wird eine Vorschubeinrichtung, mit der die Sonotrode und der Amboss relativ zueinander beweglich sind, vorgeschlagen. Die lineare Bewegung der Vorschubeinrichtung führt bevorzugt zu zwei Endpositionen, nämlich eine Offenposition und eine finale Schweißposition. Zwischen diesen beiden Positionen sind Sonotrode und Amboss relativ zueinander beweglich.

In der Offenposition kann die Ultraschallschweißvorrichtung mit Anschlussteil und Kontaktteil bestückt werden. Beim Verfahren von der Offenposition in die finale Schweißposition kommt es bereits kurz vor der finalen Schweißposition zu einem Anpressen der Sonotrode gegen das Kontaktteil und einem Einbringen der Ultraschallschwingung. Das Verschweißen findet somit in einem Bereich der linearen Bewegung statt, der als Schweißposition bezeichnet werden kann. Wenn nachfolgend von Schweißposition die Rede ist, so kann jede Position der Sonotrode darunter verstanden werden, in der ein Verschweißen zwischen Kontaktteil und Anschlussteil stattfindet, also insbesondere alle Position zwischen dem Beginn des Schweißvorgangs und dem Ende des Schweißvorgangs, insbesondere alle Positionen zwischen einem Auftreffen der Sonotrode auf das Kontaktteil bis zu einer Endposition der Sonotrode, in der die Sonotrode dem Amboss am nächsten ist.

Nachdem die Sonotrode das Kontaktteil gegen das Anschlussteil gepresst hat und Ultraschallschwingung einbringt, kommt es zu einem Verschweißen zwischen Kontaktteil und Anschlussteil. Durch das Plastifizieren der Fügepartner kann die Sonotrode weiter in Richtung der finalen Schweißposition bewegt werden, wodurch die Fügepartner weiter zusammen gedrückt werden und die Schweißzone tiefer in die Oberfläche der Fügepartner eindringt.

Die Sonotrode wird mit einer Kontaktfläche des Sonotrodenkopfes auf das Kontaktteil gedrückt. Die Kontaktfläche der Sonotrode weist in Richtung des Amboss. Bei der Relativbewegung zwischen Sonotrode und Amboss wird der Abstand zwischen der Kontaktfläche und dem Amboss, der ebenfalls flächig ausgebildet sein kann, verändert.

Wie eingangs bereits erläutert, ist es eine Aufgabe, die Ausschlussrate von Schweißverbindungen zu verringern. Wie ferner eingangs erläutert wurde, kommt es durch das Einbringen der Schwingung in die Fügepartner zu ungewollten Beschädigungen, insbesondere des Fügepartners, der nicht von der Sonotrode angeregt wird, sondern am Amboss anliegt. Um dessen Schwingung zu reduzieren, wird vorgeschlagen, dass am Sonotrodenkopf, seitlich neben der Kontaktfläche ein Dämpfungselement angeordnet ist.

Das Dämpfungselement ist insbesondere ein Kunststoffelement, welches elastisch verformbar ist. Werden Sonotrode und Amboss aufeinander zu bewegt, kommt es einerseits zu einem Kontakt zwischen der Kontaktfläche und dem Kontaktteil und andererseits zwischen dem Dämpfungselement und dem Anschlussteil. Das Anschlussteil ist auf dem Amboss angeordnet und das Kontaktteil liegt auf der dem Amboss zugewandten Oberfläche des Anschlussteils. Die Kontaktfläche der Sonotrode drückt gegen das Kontaktteil, wobei gleichzeitig die stirnseitige Oberfläche des Dämpfungselements gegen das Anschlussteil gedrückt wird. Durch das Dämpfungselement wird die Schwingung des Anschlussteils reduziert. Die Relativbewegung zwischen den Fügepartnern an ihrer Berührfläche wird somit hauptsächlich durch das Kontaktteil durchgeführt, wohingegen die Bewegung des Anschlussteils durch das Dämpfungselement reduziert, insbesondere gedämpft ist.

Um zu erreichen, dass unmittelbar beim Beginn des Schweißvorgangs das Dämpfungselement bereits an dem Anschlusselement anliegt, wird vorgeschlagen, dass das Dämpfungselement aus der Ebene der Kontaktfläche heraus ragt. Insbesondere ragt das Dämpfungselement dabei in Richtung des Amboss aus der Ebene der Kontaktfläche heraus. Die Erstreckungsrichtung des Dämpfungselements verläuft dabei bevorzugt entlang der Flächennormale der Kontaktfläche der Sonotrode.

Das Kontaktteil hat eine Materialstärke, die auch als dessen Höhe bezeichnet werden kann. Das Dämpfungselement ragt insbesondere zumindest um das Maß der Höhe des Kontaktteils aus der Ebene der Kontaktfläche heraus. Das führt dazu, dass sobald die Kontaktfläche der Sonotrode auf das Kontaktteil auftrifft, auch eine stirnseitige Oberfläche des Dämpfungselements in Kontakt mit dem Anschlusselement gelangt. Die Sonotrode bzw. die Kontaktfläche der Sonotrode definiert die Schweißfläche (Fügefläche) zwischen Anschlussteil und Kontaktteil. Das Kontaktteil kann seitlich über die Fügeflächen hinaus ragen. Das bedeutet aber auch, dass das Kontaktteil über die Kontaktfläche der Sonotrode hinaus ragt. Das Dämpfungselement ist insbesondere am Sonotrodenkopf befestigt, jedoch bevorzugt seitlich beabstandet von der Kontaktfläche. Die Beabstandung ist insbesondere zumindest gleich dem Maß, um das das Kontaktteil größer ist als die Kontaktfläche. Dadurch wird verhindert, dass das Dämpfungselement auf das Kontaktteil aufgedrückt wird und sichergestellt, dass das Dämpfungselement auf das Anschlussteil aufgedrückt wird.

In einer Draufsicht hat bevorzugt das Anschlussteil eine größte Fläche, das Kontaktteil eine hierzu kleinere Fläche und die Fügefläche hat im Bereich der Berührfläche zwischen Kontaktteil und Anschlussteil eine kleinere Fläche als die Berührfläche. Das Dämpfungselement ist so angeordnet, dass es seitlich neben der Berührfläche von Kontaktteil und Anschlussteil, jedoch im Bereich der Fläche des Anschlussteils liegt.

Das Dämpfungselement ragt derart aus der Kontaktfläche heraus, dass das Dämpfungselement bei einer Bewegung der Sonotrode von der Offenposition in die Schweißposition in Richtung des Amboss bewegt wird. Dadurch wird das Dämpfungselement bevorzugt kontinuierlich bei der Bewegung zwischen Sonotrode und Amboss gegen das Anschlusselement gedrückt.

Es wird vorgeschlagen, dass das Dämpfungselement derart aus der Kontaktfläche heraus ragt, dass das Dämpfungselement bei einer Bewegung der Sonotrode von der Offenposition in die Schweißposition mit einem Anschlussteil in Kontakt kommt. Wie bereits erwähnt, wird ein Anschlussteil mit einem Kontaktteil verschweißt. Das Anschlussteil ist dem Amboss zugewandt, das Kontaktteil ist der Sonotrode zugewandt. Die Sonotrode bringt die Schwingung in das Kontaktteil ein und eine Schwingung des Anschlussteils soll verhindert werden. Dadurch, dass das Dämpfungselement in Kontakt mit dem Anschlussteil kommt, wird seine Schwingung gedämpft.

Es wird vorgeschlagen, dass das Dämpfungselement derart aus der Kontaktfläche heraus ragt, dass das Dämpfungselement bei einer Bewegung der Sonotrode von der Offenposition in die Schweißposition elastisch verformt wird. Diese elastische Verformung führt zu einer Federkraft, die auf das Anschlusselement wirkt. Die Verformung ist insbesondere eine Stauchung in Bewegungsrichtung des Sonotrodenkopfes. Mit zunehmender Stauchung steigt die Rückstellkraft, die das Dämpfungselement auf das Anschlusselement ausübt.

Es wird vorgeschlagen, dass das Dämpfungselement derart aus der Kontaktfläche heraus ragt, dass der Grad der elastischen Verformung des Dämpfungselements bei einer Bewegung der Sonotrode von einer Offenposition in die Schweißposition umgekehrt proportional zum Abstand zwischen Sonotrode und Amboss ist. Das heißt, dass mit sinkendem Abstand die elastische Verformung größer wird. Mit sinkendem Abstand zwischen Sonotrode und Amboss steigt auch die Anpresskraft der Kontaktfläche auf das Kontaktteil und somit die eingebrachte Schwingungsenergie in den Fügebereich zwischen Anschlussteil und Kontaktteil. Diese erhöhte Schweißenergie führt zu einer erhöhten Schwingung des Anschlussteils, wenn keine Dämpfung vorhanden ist. Durch die ansteigende Rückstellkraft wächst auch die Dämpfung des Anschlussteils mit dem Anstieg der eingebrachten Schweißenergie.

Es wird vorgeschlagen, dass das Dämpfungselement an zumindest zwei bevorzugt einander gegenüberliegenden Seitenkanten der Kontaktfläche angeordneten Dämpfungselementen gebildet ist. Das Dämpfungselement muss nicht zwingend einstückig, sondern kann auch mehrstückig sein. Das Dämpfungselement kann dabei an Seitenkanten der Kontaktfläche angeordnet sein, bevorzugt an einander gegenüber liegenden Seitenkanten. Auch kann das Dämpfungselement zumindest Abschnittsweise umlaufend an den Seitenkanten der Kontaktfläche des Sonotrodenkopfes angeordnet sein.

Es wird vorgeschlagen, dass das Dämpfungselement ein Elastomer ist. Dadurch wird eine gute elastische Formbarkeit des Dämpfungselements gewährleistet.

Es wird vorgeschlagen, dass ein stirnseitiges Ende des Dämpfungselements eine Berührfläche aufweist, wobei die Berührfläche eben oder konvex geformt ist. Bei einer ebenen Berührfläche verläuft die Ebene bevorzugt parallel zur Oberfläche des Anschlussteils und/oder der Kontaktfläche des Sonotrodenkopfes. Die Berührfläche ist während der gesamten Schweißdauer nahezu konstant. Bei einer konvex geformten Berührfläche kommt es dazu, dass mit sinkendem Abstand zwischen Sonotrode und Amboss die Fläche, mit der das Dämpfungselement auf dem Anschlusselement aufliegt ansteigt und auch die Rückstellkraft, und somit die Reibkraft zwischen dem Dämpfungselement und dem Anschlussteil ansteigt. Mit größerer Fläche und mithin größerer Haftreibung steigt auch die Dämpfung des Anschlussteils an.

Es wird vorgeschlagen, dass sich eine Querschnittsfläche durch das Dämpfungselement parallel zur Kontaktfläche ausgehend von der Kontaktfläche hin zu einem stirnseitigen Ende des Dämpfungselements verjüngt, insbesondere dass sich das Dämpfungselement konisch verjüngt. Wie bei einer konvexen Berührfläche kommt es auch bei der Verjüngung des Kontaktelements mit sinkendem Abstand zwischen Sonotrodenkopf und Amboss zu einer Vergrößerung der Kontaktfläche, mit der das Dämpfungselement auf dem Anschlusselement aufliegt.

Es wird vorgeschlagen, dass das Dämpfungselement in einer aus einem anderen Material als das Dämpfungselement gebildeten Aufnahme im Bereich der Sonotrode abnehmbar befestigt ist. Die Aufnahme kann im Bereich der Sonotrode, insbesondere im Bereich des Sonotrodenkopfes angeordnet sein. Die Aufnahme kann an der Sonotrode, insbesondere am Sonotrodenkopf befestigt sein. Die Aufnahme liegt ausgehend von der Kontaktfläche des Sonotrodenkopfes hinter der Kontaktfläche, das heißt beabstandet von der Kontaktfläche. Die Aufnahme ist aus einem biegesteifen Kunststoff oder aus einem beigesteifen metallischen Material gebildet. In der Aufnahme kann das Dämpfungselement abnehmbar befestigt sein. Das führt dazu, dass ein Dämpfungselement mit einfachsten Mitteln ausgetauscht werden kann, beispielsweise in dem das Dämpfungselement verklemmt, verschraubt, formschlüssig befestigt oder dergleichen ist. Das Dämpfungselement unterliegt Verschleiß und kann bei Bedarf somit einfach ausgetauscht werden.

Es wird vorgeschlagen, dass die Aufnahme aus zwei Schenkeln gebildet ist, die einen spitzen Winkel zueinander aufspannen und dass das Dämpfungselement in dem spitzen Winkel aufgespannt ist. Somit erfährt das Dämpfungselement auch eine seitliche Führung durch die Aufnahme.

Es wird ein Verfahren zum Verschweißen eines Kontaktteils mit einem Anschlussteil durch Ultraschallschweißen vorgeschlagen. Bei diesem Verfahren wird zunächst ein metallisches Anschlussteil zwischen einem Amboss und einer Sonotrode auf den Amboss aufgelegt.

Das Anschlussteil ist dabei bevorzugt aus einem Kupferwerkstoff oder einem Aluminiumwerkstoff, insbesondere aus einer Kupferlegierung oder einer Aluminiumlegierung gebildet. Das Anschlussteil hat eine ebene Fläche, die der Sonotrode zugewandt ist.

Auf diese ebene Fläche des Anschlussteils wird ein metallisches Kontaktteil aufgelegt. Das metallische Kontaktteil wird auf der der Sonotrode zugewandten Seite des Anschlussteils aufgelegt. Das metallische Kontaktteil kann aus einem gleichen oder einem anderen Werkstoff als das Anschlussteil gebildet sein. Das Kontaktteil kann aus einem Kupferwerkstoff oder einem Aluminiumwerkstoff, insbesondere einer Kupferlegierung oder einer Aluminiumlegierung gebildet sein. Das metallische Kontaktteil hat auf der dem Anschlussteil zugewandten Seite ebenfalls eine ebene Oberfläche. Die beiden ebenen Oberflächen liegen aufeinander und bilden eine Berührfläche.

Das Anschlussteil kann ein Kabelschuh, ein Crimpkontakt, eine Anschlussfahne, ein Flachleiter oder dergleichen sein. Das Kontaktteil kann ein Kabelschuh, ein Crimpkontakt, eine Anschlussfahne, ein Kabel, ein Flachleiter, ein Litzenleiter oder dergleichen sein.

Eine Sonotrode wird von einer Offenposition in Richtung des Amboss in eine Schweißposition bewegt. Darunter ist auch zu verstehen, dass es sich um eine Relativbewegung zwischen Amboss und Sonotrode handelt, wobei die aktive Bewegung durch den Amboss oder die Sonotrode durchgeführt werden kann.

Eine Kontaktfläche des Sonotrodenfläche wird auf das Kontaktteil bei der Bewegung aufgedrückt, wodurch das Kontaktteil auf das Anschlussteil im Bereich der Berührfläche drückt. Die Kontaktfläche des Sonotrodenkopfes definiert die Fügefläche zwischen Anschlussteil und Kontaktteil.

Sobald die Kontaktfläche des Sonotrodenkopfes das Kontaktteil gegen das Anschlussteil drückt, kommt es zu einem Ultraschallverschweißen zwischen Anschlussteil und Kontaktteil, indem die Sonotrode über die Kontaktfläche mittels Ultraschall eine Schwingungsenergie auf das Kontaktteil überträgt. Die Fügefläche zwischen Anschlussteil und Kontaktteil wird durch die Schwingungsenergie erhitzt und zumindest einer der Fügepartner plastifiziert und schmilzt auf. Hierdurch kommt es zu einem Verschweißen.

Bei diesem Einbringen der Ultraschallschwingung wird nicht nur das Kontaktteil sondern auch das Anschlussteil in Schwingung versetzt. Um die Schwingung des Anschlussteils zu verringern, wird vorgeschlagen, dass beim Bewegen den Sonotrode in Richtung der Schweißposition ein am Sonotrodenkopf seitlich neben der Kontaktfläche des Sonotrodenkopfes angeordnetes Dämpfungselement gegen das Anschlussteil gedrückt wird und dabei elastisch verformt wird. Durch die elastische Verformung kommt es zu einer Rückstellkraft des Dämpfungselements, welche auf das Anschlussteil wirkt. Diese Rückstellkraft drückt das Anschlussteil gegen den Amboss und führt dazu, dass die Schwingung des Anschlussteils gedämpft wird.

Es wird vorgeschlagen, dass bei der Bewegung die Verformung des Dämpfungselements größer wird und dadurch die Anpresskraft des Dämpfungselements auf das Anschlussteil größer wird. Die Schweißposition ist insbesondere definiert durch einen Bereich einer linearen Bewegung zwischen Amboss und Sonotrode, in dem die Kontaktfläche das Kontaktteil gegen das Anschlussteil presst. Beim Verschweißen wird der Abstand zwischen Amboss und Sonotrode verringert. Durch diese Verringerung des Abstandes kommt es zu einer Erhöhung der Anpresskraft des Dämpfungselements auf das Anschlussteil.

Das Dämpfungselement führt dazu, dass eine Schwingung des Anschlussteils parallel zur Schwingungsrichtung der Sonotrode gedämpft wird.

Nachfolgend wird der Gegenstand anhand einer Ausführungsbeispiele zeigenden Zeichnung näher erläutert. In der Zeichnung zeigen:
- Fig. 1a, b: verschiedene Anschlussteile und Kontaktteile;
- Fig. 2: eine Ansicht einer Ultraschallschweißvorrichtung;
- Fig. 3a-e: Dämpfungselemente an Sonotrodenköpfen;
- Fig. 4: eine Schweißvorrichtung nicht Gegenstand der Erfindung;
- Fig. 5a-c: ein Schweißerfahren gemäß einem Ausführungsbeispiel.

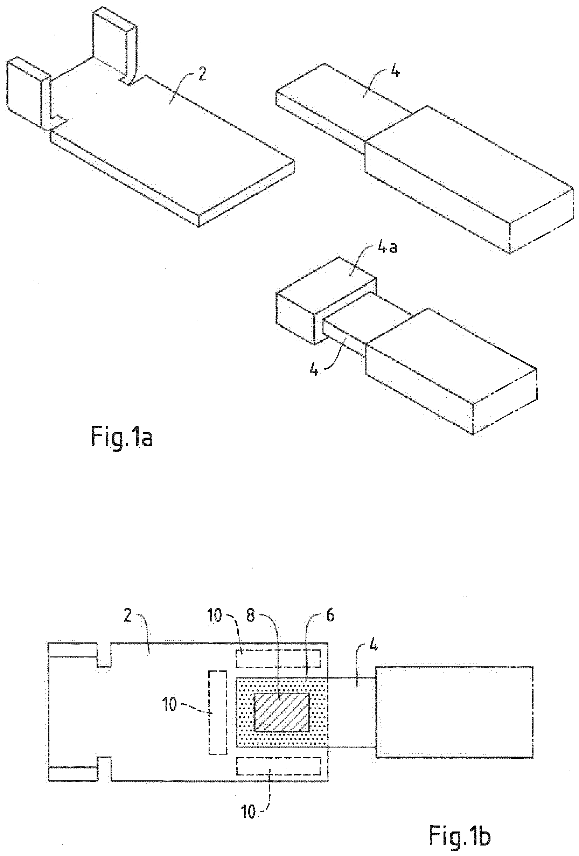

Fig. 1a zeigt ein Anschlussteil, welches beispielsweise aus einem Aluminiumwerkstoff oder einem Kupferwerkstoff gebildet sein kann. Das Anschlussteil gemäß der Fig. 1a kann ein Crimpkabelschuh sein, jedoch auch jegliches anderes Anschlussteil, wie beispielsweise ein Flachleiter, eine Anschlusskonsole, ein Rohrkabelschuh, eine Anschlussfahne, ein bimetallisches Terminal oder dergleichen. Dieses Anschlussteil 2 wird mit einem Kontaktteil 4 gefügt. Ein Kontaktteil 4 kann entsprechend einem Anschlussteil 2 gebildet sein oder auch eine elektrische Leitung, beispielsweise eine Litzenleitung mit einer Vielzahl von Litzen sein. Dies ist in der Fig. 1a dargestellt, in der rechts zwei verschiedene Kontaktteile 4, nämlich einmal ein Flachleiter sowie einmal eine Litzenleitung gezeigt sind.

Ein abisoliertes Ende einer Litzenleitung kann ebenso mit dem Anschlussteil 2 verschweißt werden wie ein massiver Leiter. Bevorzugt wird um das abisolierte Ende des Litzenleiters eine Hülse 4a gelegt, die aus einem gleichen oder einem verschiedenen Metall als die Litzen des Kontaktteils 4 sein kann. Die Hülse 4a wird auf die Litzen aufgepresst und anschließend, wie nachfolgend beschrieben, mit dem Anschlussteil 2 verschweißt.

Fig. 1b zeigt eine Draufsicht auf eine Verbindung, welche mit einer gegenständlichen Schweißvorrichtung hergestellt wurde. Zu erkennen ist, dass auf dem Anschlussteil 2, das Kontaktteil 4 aufliegt. Die Breite des Anschlussteils 2 kann größer sein als die Breite des Kontaktteils 4. Dies ist optional. Im Bereich einer Berührfläche 6 zwischen Anschlussteil 2 und Kontaktteil 4 ist eine Fügefläche/Schweißfläche 8 vorgesehen, welche durch eine Sonotrode bzw. eine Kontaktfläche einer Sonotrode, wie nachfolgend noch dargestellt werden wird, hergestellt wird.

In der Fig. 1b ist ferner mit den Flächen 10 angedeutet, wo ein nachfolgend beschriebenes Dämpfungselement 22 auf dem Anschlussteil aufliegen kann, um dieses zu dämpfen. Die Flächen 10 sind die Berührflächen zwischen dem Dämpfungselement 22 und dem Anschlussteil 2. Die Flächen 10 werden während des Verschweißens jedoch nicht verändert, so dass die Oberfläche des Anschlussteils 2 im Bereich der Flächen 10 unverändert bleibt. Die Flächen 10 sind lediglich zur Veranschaulichung des gegenständlichen Verfahrens eingezeichnet.

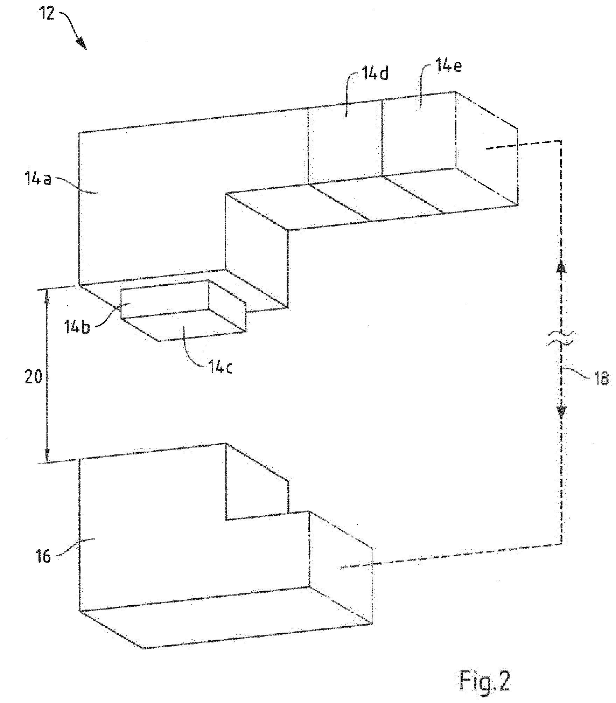

Eine Ultraschallschweißvorrichtung 12 ist in der Fig. 2 dargestellt. Die Ultraschallschweißvorrichtung 12 umfasst eine Sonotrode 14a mit einem Sonotrodenkopf 14b, an welchem eine Kontaktfläche 14c gebildet ist. Die Sonotrode 14a wird über einen optionalen Booster 14d und einen Schwingungsgenerator 14e angetrieben. Auf der der Kontaktfläche 14c gegenüber liegenden Seite ist ein Amboss 16 vorgesehen. Mit Hilfe einer Vorschubeinrichtung 18 kann ein Abstand 20 zwischen der Kontaktfläche 14c und der Oberfläche des Amboss 16 verändert werden, insbesondere zwischen einer in der Fig. 2 gezeigten Offenposition und einer Schweißposition.

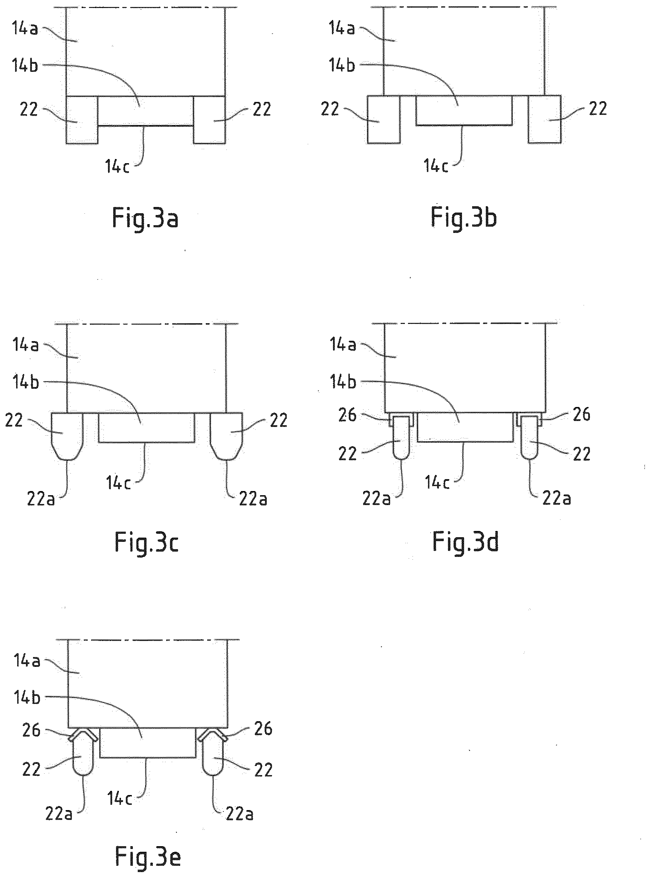

Für das Dämpfen des Anschlussteils 2 wird ein Dämpfungselement 22 vorgeschlagen. Fig. 3a zeigt einen Querschnitt durch einen Sonotrodenkopf 14b samt Dämpfungselement 22. Zu erkennen ist, dass seitlich neben dem Sonotrodenkopf 14b das Dämpfungselement 22 angeordnet ist. Das Dämpfungselement 22 kann einstückig oder mehrstückig sein. Das Dämpfungselement 22 ragt über eine Ebene der Kontaktfläche 14c hinaus.

In der Fig. 3b ist zu erkennen, dass das Dämpfungselement 22 mit einem seitlichen Abstand 24 zumindest einer der Seitenkanten des Sonotrodenkopfes 14b mithin der Kontaktfläche 14c angeordnet sein kann.

In der Fig. 3c ist zu erkennen, dass das Dämpfungselement 22 in Längsrichtung konisch verjüngend mit einer konvexen Berührfläche 22a gebildet sein kann.

Fig. 3d zeigt das Dämpfungselement 22, welches in Aufnahmen 26 entfernbar angeordnet ist. Das Dämpfungselement 22 gemäß der Fig. 3d hat ebenfalls eine konvexe Berührfläche 22a.

Fig. 3e zeigt die Aufnahme 26 mit zwei Schenkeln, die einen spitzen Winkel zueinander aufspannen. In der Aufnahme 26 kann das Dämpfungselement 22 angeordnet sein.

Das Dämpfungselement 22 kann einen ellipsenförmig oder kreisförmig gebildeten Querschnitt aufweisen.

Die gezeigten Dämpfungselemente 22 lassen sich allesamt frei mit den gezeigten Aufnahmen 26 und in den verschiedensten Kombinationen kombinieren. Auch kann jeweils nur ein Dämpfungselement 22 vorgesehen sein.

Jeweils ein Dämpfungselement 22 kann jeweils auf einer der Flächen 10 aufliegen. Es können drei Dämpfungselemente 22, zwei Dämpfungselemente 22 oder auch nur ein Dämpfungselement 22 vorgesehen sein. Insbesondere ist ein Dämpfungselement 22 auf der Fläche 10 angeordnet, welche sich längst der Quererstreckung des Anschlussteils 2 erstreckt und dem stirnseitigen Ende des Anschlussteils 2 zugewandt ist, an von der Verschweißung entfernt ist.

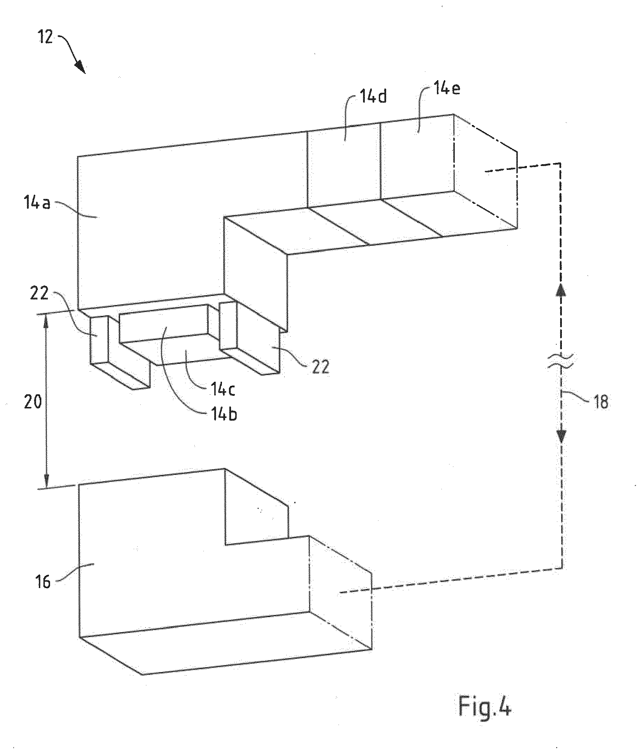

Eine Ultraschallschweißvorrichtung 14 entsprechend der Fig. 2 mit dem gegenständlichen Dämpfungselement 22 ist in der Fig. 4 gezeigt. Zu erkennen ist, dass das Dämpfungselement 22 über die Kontaktfläche 14c des Sonotrodenkopfes 14b hinaus ragt.

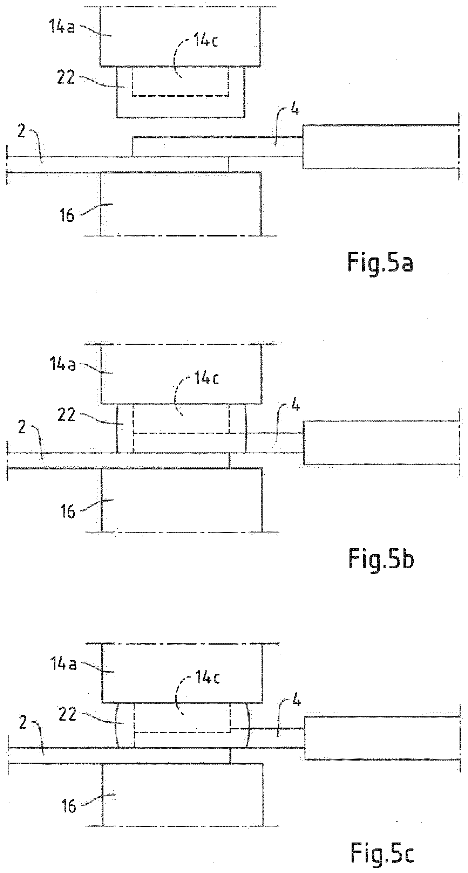

In einer Seitenansicht der Schweißvorrichtung wird das gegenständliche Verfahren in den Fig. 5a-c beschrieben. Mit Hilfe der Vorschubeinrichtung 18 wird zunächst die Sonotrode 14a bezogen auf den Amboss 16 in eine in Fig. 5a gezeigte Offenposition verfahren. In dieser Offenposition ist der Abstand 20 zwischen Kontaktfläche 14c und Amboss 16 derart, dass ein Anschlussteil 2 auf den Amboss 16 und auf das Anschlussteil 2 ein Kontaktteil 4 aufgelegt werden kann. Anschlussteil 2 und Kontaktteil 4 können entsprechend Fig. 1b aufeinander aufgelegt werden.

Ferner ist zu erkennen, dass in der in Fig. 5a gezeigten Offenposition das Dämpfungselement 22 nicht gestaucht ist und in Richtung des Ambosses 16 über die Kontaktfläche 14c hinaus ragt.

Nachdem Anschlussteil 2 und Kontaktteil 4 aufeinander platziert wurden wird mittels der Vorschubeinrichtung 18 der Abstand 20 verringert, bis die Kontaktfläche 14c auf dem Kontaktteil 4 aufliegt.

Über den Ultraschallgenerator 14e und optional dem Booster 14d wird eine Ultraschallschwingung in den Sonotrodenkopf 14b eingeleitet. Durch die Anpresskraft der Kontaktfläche 14c gegen das Kontaktteil 4 wird diese Schwingung in die Schweißfläche 8 eingebracht, so dass Anschlussteil 2 und Kontaktteil 4 miteinander verschweißen.

Wie in der Fig. 5b zu erkennen ist, liegt dabei das Dämpfungselement 22 auf dem Anschlussteil 2 auf und ist bereits gegebenenfalls auch nur minimal gestaucht. Die Höhe 28 des Dämpfungselements 22 ist gegenüber der Fig. 5a leicht reduziert. Durch dieses leichte Stauchen übt das Dämpfungselement 22 eine Haltekraft auf das Anschlussteil 2 aus und dämpft die über die Berührfläche 6, respektive die Schweißfläche 8, eingetragene Schwingung des Anschlussteils 2. Diese in der Fig. 5b gezeigte Position ist bereits eine Schweißposition.

In der Fig. 5c ist ebenfalls eine Schweißposition gezeigt, bei der jedoch der Abstand 20 zwischen Kontaktfläche 14c und Amboss 16 weiter gegenüber der Fig. 5b verringert wurde. Hierdurch wird das Dämpfungselement 22 weiter gestaucht, so dass dessen Höhe 28 gegenüber der Fig. 5b weiter reduziert ist. Durch diese zusätzliche Stauchung steigt die Rückstellkraft des Dämpfungselements 22 auf das Anschlussteil 2 weiter an, so dass die Dämpfung erhöht wird.

Mit Hilfe des gegenständlichen Dämpfungselements ist es möglich, Beschädigungen am Anschlussteil 2 beim Verschweißen mit einem Kontaktteil 4 auf ein Minimum zu reduzieren. Die Ausschussrate an fehlerhaften Teilen ist somit reduziert.

### Bezugszeichenliste

- 2: Anschlussteil
- 4: Kontaktteil
- 4a: Hülse
- 6: Berührfläche
- 8: Schweißfläche
- 10: Flächen
- 12: Ultraschallschweißvorrichtung
- 14a: Sonotrode
- 14b: Sonotrodenkopf
- 14c: Kontaktfläche
- 14d: Booster
- 14e: Ultraschallgenerator
- 16: Amboss
- 18: Vorschubeinrichtung
- 20: Abstand
- 22: Dämpfungselement
- 22a: Berührfläche
- 26: Aufnahmen
- 28: Höhe

## Patentansprüche

1. Verfahren zum Verschweißen eines Kontaktteils mit einem Anschlussteil durch Ultraschallschweißen, bei dem
- ein metallisches Anschlussteil (2) zwischen einem Amboss (16) und einer Sonotrode (14a, b, c) auf den Amboss (16) aufgelegt wird,
- ein metallisches Kontaktteil (4) auf der der Sontotrode (14a, b, c) zugewandten Seite des Anschlussteils (2) auf das Anschlussteil (2) aufgelegt wird,
- die Sonotrode (14a, b, c) von einer Offenposition in Richtung des Amboss (16) in eine Schweißposition bewegt wird und dabei eine Kontaktfläche (14c) an einem Sonotrodenkopf (14b) das Kontaktteil (4) auf das Anschlussteil drückt (2) und
- die Sonotrode (14a, b, c) über die Kontaktfläche (14c) mittels Ultraschall eine Schwingungsenergie auf das Kontaktteil (4) überträgt mittels derer das Anschlussteil (2) mit dem Kontaktteil (4) verschweißt wird,
- **dadurch gekennzeichnet,**
- **dass** beim Bewegen der Sonotrode (14a, b, c) in Richtung der Schweißposition ein am Sonotrodenkopf (14b) seitlich neben der Kontaktfläche (14c) des Sonotrodenkopfes (14b) angeordnetes Dämpfungselement (22) gegen das Anschlussteil (2) gedrückt wird und dabei elastisch verformt wird.

2. Verfahren nach Anspruch 1,
**dadurch gekennzeichnet,**
- **dass** bei der Bewegung die Verformung des Dämpfungselements (22) größer wird und dadurch eine Anpresskraft des Dämpfungselements (22) auf das Anschlussteil (2) größer wird.

3. Verfahren nach Anspruch 1 oder 2,
**dadurch gekennzeichnet,**
- **dass** eine Schwingung des Anschlussteils (2) parallel zur Schwingungsrichtung der Sonotrode (14a, b, c) durch das Dämpfungselement (22) gedämpft wird.

## Claims

1. Method for welding a contact part to a connection part by ultrasonic welding, in which
- a metallic connection part (2) is placed between an anvil (16) and a sonotrode (14a, b, c) onto the anvil (16), and
- a metallic contact part (4) is placed onto the connection part (2) on the side of the connection part (2) facing the sonotrode (14a, b, c),
- the sonotrode (14a, b, c) is moved from an open position in the direction of the anvil (16) into a welding position and thereby a contact surface (14c) of a sonotrode head (14b) pressing the contact part (4) onto the connection part (2) and
- the sonotrode (14a, b, c) transmits an oscillation energy to the contact part (4) via the contact surface (14c) by means of ultrasound, by means of which the connection part (2) is welded to the contact part (4),
**characterized in**
- **that** when the sonotrode (14a, b, c) is moved in the direction of the welding position, a damping element (22) arranged on the sonotrode head (14b) laterally next to the contact surface (14c) of the sonotrode head (14b) is pressed against the connection part (2) and is elastically deformed thereby.

2. Method according to claim 1,
**characterized in**
- **that** during the movement the deformation of the damping element (22) becomes greater and as a result a contact force of the damping element (22) onto the connection part (2) becomes greater.

3. Method according to claim 1 or 2,
**characterized in**
- **that** a vibration of the connection part (2) parallel to the direction of oscillation of the sonotrode (14a, b, c) is damped by the damping element (22).

## Revendications

1. Procédé de soudage par ultrasons d'une pièce de contact avec une pièce de raccordement, dans lequel
- une pièce de raccordement métallique (2) est placée entre une enclume (16) et une sonotrode (14a, b, c) sur l'enclume (16),
- une pièce de contact métallique (4) est posée sur la pièce de raccordement (2) sur le côté de la pièce de raccordement (2) tourné vers la sonotrode (14a, b, c),
- la sonotrode (14a, b, c) est déplacée d'une position ouverte en direction de l'enclume (16) vers une position de soudage et ainsi une surface de contact (14c) une tête de sonotrode (14b) presse la pièce de contact (4) sur la pièce de raccordement (2) et
- la sonotrode (14a, b, c) transmet, par l'intermédiaire de la surface de contact (14c), au moyen d'ultrasons, une énergie vibratoire à la pièce de contact (4), au moyen de laquelle la pièce de raccordement (2) est soudée à la pièce de contact (4),
**caractérisé en ce**
- **que**, lors du déplacement de la sonotrode (14a, b, c) en direction de la position de soudage, un élément d'amortissement (22) disposé latéralement à côté de la surface de contact (14c) de la tête de sonotrode (14b), est pressé contre la pièce de raccordement (2) et est ainsi déformé élastiquement.

2. Procédé selon la revendication 1,
**caractérisé en ce**
- **que**, lors du déplacement, la déformation de l'élément d'amortissement (22) augmente et, par conséquent, une force de pression de l'élément d'amortissement (22) sur le pièce de raccordement (2) augmente.

3. Procédé selon la revendication 1 ou 2,
**caractérisé en ce**
- **qu'**une oscillation de la pièce de raccordement (2) parallèle à la direction d'oscillation de la sonotrode (14a, b, c) est amortie par l'élément d'amortissement (22).
